(19) Europäisches Patentamt

European Patent Office

Office européen des brevets

(11) **EP 3 373 225 A1**

(12) **EUROPEAN PATENT APPLICATION**
published in accordance with Art. 153(4) EPC

(43) Date of publication:
**12.09.2018 Bulletin 2018/37**

(21) Application number: **16845526.9**

(22) Date of filing: **17.05.2016**

(51) Int Cl.:
***G06Q 30/02*** (2012.01)

(86) International application number:
**PCT/CN2016/082373**

(87) International publication number:
**WO 2017/045412 (23.03.2017 Gazette 2017/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.09.2015 CN 201510585037**

(71) Applicant: **Tencent Technology (Shenzhen) Company Limited**
**Shenzhen, Guangdong 518057 (CN)**

(72) Inventor: **LU, Zheng**
**Shenzhen**
**Guangdong 518057 (CN)**

(74) Representative: **EP&C**
**P.O. Box 3241**
**2280 GE Rijswijk (NL)**

(54) **DELIVERY METHOD, APPARATUS, AND SYSTEM FOR PROMOTING INFORMATION**

(57) A promotion information pushing method is disclosed, including: obtaining promotion information that needs to be pushed and user behavior data; determining a degree of relevance between a user and the promotion information, and a personal impact degree and a social impact degree of the user according to the user behavior data; determining a pushing target of the promotion information based on the degree of relevance between the user and the promotion information, the personal impact degree, and the social impact degree; and pushing the promotion information to the pushing target. In addition, a corresponding apparatus and a corresponding system are provided.

FIG. 1A

EP 3 373 225 A1

Obtaining promotion information that needs to be pushed and user behavior data — 101

Determining a degree of relevance between a user and the promotion information according to the user behavior data — 102

Calculating a personal impact degree and a social impact degree of the user according to the user behavior data — 103

Determining a pushing target of the promotion information based on, for each user, the degree of relevance between the user and the promotion information, the personal impact degree, and the social impact degree — 104

Pushing the promotion information to the pushing target — 105

FIG. 1B

**Description**

RELATED APPLICATION

This application claims priority to Chinese Patent Application No. 201510585037X, entitled "PROMOTION INFORMATION PUSHING METHOD, APPARATUS, AND SYSTEM" filed with the Chinese Patent Office on September 15, 2015, which is incorporated herein by reference in its entirety.

FIELD OF THE TECHNOLOGY

The present disclosure relates to the field of communications technologies and, specifically, to a promotion information pushing method, apparatus, and system.

BACKGROUND OF THE DISCLOSURE

Promotion information such as advertisement plays a vital role in promoting a product or an event. Therefore, how to push promotion information has long been a problem of focus in the industry.
Using the advertisement as an example, in the existing technology, when searching for users to whom the advertisement is to be pushed for presentation, degrees of interest in the advertisement of the users are usually analyzed first. For example, user behavior or user tags may be used to determine the degrees of interest in the advertisement of the users. Then, the users are scored based on the degrees of interest, and the advertisement is pushed to users in descending order of scores.
According to the present disclosure, although the pushing accuracy of promotion information, such as advertisement, can be improved to some extent using the existing technology, the pushing effect is still not desired.

SUMMARY

Embodiments of the present invention provide a promotion information pushing method, apparatus, and system, so as to improve pushing flexibility and enhance a pushing effect.
An embodiment of the present invention provides a promotion information pushing method. The method includes obtaining promotion information that needs to be pushed and user behavior data; determining a degree of relevance between a user and the promotion information according to the user behavior data; calculating a personal impact degree and a social impact degree of the user according to the user behavior data; determining a pushing target of the promotion information based on the degree of relevance between the user and the promotion information, the personal impact degree, and the social impact degree; and pushing the promotion information to the pushing target.
Accordingly, an embodiment of the present invention further provides a promotion information pushing apparatus, including a processor and a memory for storing data, the processor being configured for: obtaining promotion information that needs to be pushed and user behavior data; determining a degree of relevance between a user and the promotion information according to the user behavior data; calculating a personal impact degree and a social impact degree of the user according to the user behavior data; determining a pushing target of the promotion information based on the degree of relevance between the user and the promotion information, the personal impact degree, and the social impact degree; and pushing the promotion information to the pushing target.
In addition, an embodiment of the present invention further provides a promotion information pushing system, including any promotion information pushing apparatus according to the embodiments of the present invention.
In addition, an embodiment of the present invention further provides a non-transitory computer-readable storage medium, storing a processor executable instruction, the processor executable instruction being used for performing operations in methods of the present disclosure.
target of the promotion information based on the degree of relevance between the user and the promotion information, the personal impact degree, and the social impact degree; and pushing the promotion information to the pushing target.
Other aspects of the present disclosure can be understood by those skilled in the art in light of the description, the claims, and the drawings of the present disclosure.

BRIEF DESCRIPTION OF THE DRAWINGS

To describe the technical solutions in the embodiments of the present invention more clearly, the following briefly describes the accompanying drawings for describing the embodiments. Apparently, the accompanying drawings in the following description show merely some embodiments of the present invention, and a person skilled in the art may derive other drawings from these accompanying drawings without creative efforts.

FIG. 1A is a schematic diagram of a promotion information pushing system according to an embodiment of the present invention;
FIG. 1B is a flowchart of a promotion information pushing method according to an embodiment of the present invention;
FIG. 2 is a flowchart of another promotion information pushing method according to an embodiment of the present invention;
FIG. 3 is a schematic structural diagram of a promotion information pushing apparatus according to an embodiment of the present invention; and

DESCRIPTION OF EMBODIMENTS

The following describes the technical solutions in the embodiments of the present invention with reference to the accompanying drawings. Apparently, the described embodiments are merely some but not all of the embodiments of the present invention. All other embodiments obtained by a person skilled in the art based on the embodiments of the present invention without creative efforts shall fall within the protection scope of the present disclosure.

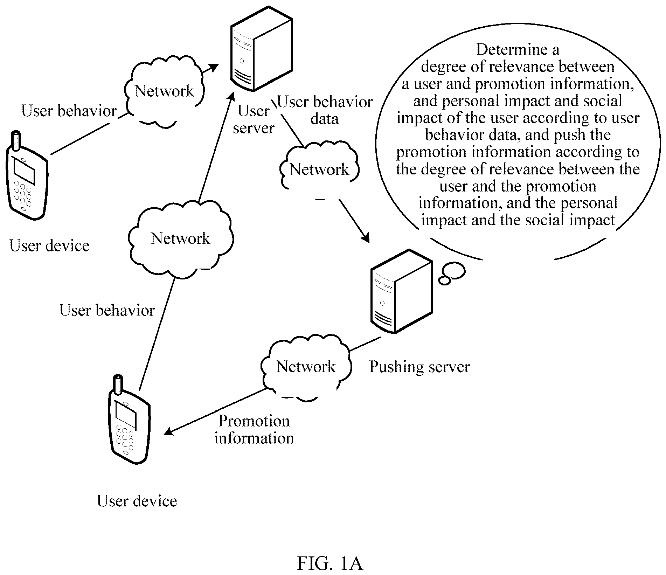

A promotion information pushing system may include any promotion information pushing apparatus provided in the embodiments of the present invention. Referring to FIG. 1A, the promotion information pushing apparatus may be specifically integrated in a server, for example, in a pushing server. In addition, the promotion information pushing system may further include other devices, such as a user device and a user server. The user device may be used for receiving promotion information pushed by the pushing server and performing an operation on the promotion information. The user server may be used for collecting user behavior of each user to generate user behavior data, and for providing the user behavior data to the pushing server.

As shown in FIG. 1A, when promotion information such as advertisement needs to be pushed, user behavior data may be obtained from a user server by a pushing server. Then, a degree of relevance between a user and the promotion information is determined according to the user behavior data, and a personal impact degree and a social impact degree of the user are calculated according to the user behavior data. Further, a pushing target of the promotion information is determined based on the degree of relevance between the user and the promotion information, the personal impact degree, and the social impact degree, and the promotion information such as advertisement is pushed to a user device of the pushing target.

The following provides detailed descriptions respectively. It should be noted that the numbers of the following embodiments are not intended to limit preference orders of the embodiments.

One embodiment provides a promotion information pushing method, from the perspective of a promotion information pushing apparatus. The promotion information pushing apparatus may be specifically integrated in a device of a server such as a pushing server.

The promotion information pushing method may include: obtaining promotion information that needs to be pushed and user behavior data; determining a degree of relevance between a user and the promotion information according to the user behavior data; calculating a personal impact degree and a social impact degree of the user according to the user behavior data; determining a pushing target of the promotion information based on the degree of relevance between the user and the promotion information, the personal impact degree, and the social impact degree; and pushing the promotion information to the pushing target.

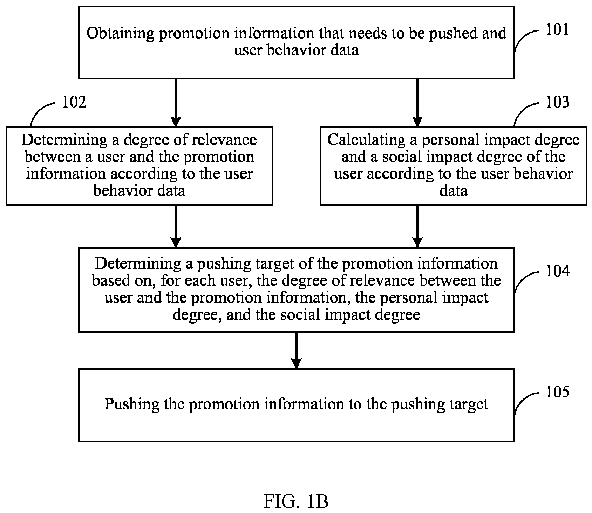

As shown in FIG. 1B, specifically, the promotion information pushing method may include the followings.

101: Obtaining promotion information that needs to be pushed and user behavior data.

The promotion information may be advertisement, or may be other information that needs to be promoted and pushed to certain users. The promotion information may be stored in the promotion information pushing apparatus, or may be stored in another device such as an advertisement server.

The user behavior data refers to data that may be used for analyzing a user behavior, for example, browsing history, click-through history, download history, comment history, reply history, and/or liking history of the user. The user behavior data may be stored in the promotion information pushing apparatus, or may be stored in another device such as a user server.

When the promotion information is stored in advertisement server and the user behavior data is stored in a user server, the promotion information may be obtained from the advertisement server and the user behavior data is obtained from the user server.

102: Determining a degree of relevance between a user and the promotion information according to the user behavior data.

For example, specifically, user interest may be determined according to the user behavior data, and a degree of relevance between a user and the promotion information can be calculated according to the user interest.

For example, a degree of matching between the promotion information and the user interest may be calculated based on the user interest to obtain the degree of relevance between the user and the promotion information.

The user interest may be calculated in multiple ways. For example, an interest weight of the user within a preset time period may be calculated according to the user behavior data.

103: Calculating a personal impact degree and a social impact degree of the user according to the user behavior data. This may specifically include the followings.

(1) According to the user behavior data, determining the impact of the user on another user to obtain the personal impact degree.

The personal impact degree may be calculated according to the user behavior data in multiple ways. For example, specifically, statistical analysis may be performed on the user behavior data to obtain a first interaction ratio and a second interaction ratio and, based on the first interaction ratio and the second interaction ratio, the personal impact degree can be calculated.

For example, corresponding weights are respectively set for the first interaction ratio and the second interaction ratio, the first interaction ratio and the second interaction ratio are respectively multiplied by the corresponding weights, and the products are then added to obtain the sum as the personal impact degree. Alternatively, the personal impact degree may be calculated in other ways according to an actual application requirement.

The first interaction ratio is a ratio of interaction between the user and the promotion information in history, that is, within a past preset time period. The ratio of interaction between the user and the promotion information refers to a ratio between the number of interaction between the user and the promotion information and the total number of the promotion information items pushed to the user. The interaction between the user and the promotion information refers to a corresponding operation performed by the user on the promotion information, such as reposting, replying to, liking, or commenting on the promotion information.

The second interaction ratio is a ratio of interaction between the user and friends of the user in history, i.e., within a past preset time period after the user interacted with the promotion information. The ratio of interaction between the user and the friends of the user refers to a ratio between the number of friends that interact with the user and the total number of fiends of the user, for example, a ratio between the number of the friends replying to or reposting a post of the user and the total number of friends of the user, etc. After the user interacted with the promotion information, the interaction between the user and a friend of the user refers to a corresponding operation performed by the friend of the user on the promotion information that has been operated by the user, such as reposting, replying to, liking, or commenting, etc. For example, after the user reposted a promotion advertisement, if a friend of the user reposts, replies to, likes, or comments on the reposted advertisement, it indicates that the friend of the user interacts with the user after the user interacted with the promotion information. The preset time period may be set according to an actual application requirement.

For another example, each interaction between the user and a friend of the user may be determined according to the user behavior data, and the interaction is scored. Then, statistical analysis can be performed on the scores of interaction between the user and all friends of the user to obtain a total score, and the personal impact degree of the user can be calculated according to the total score and the number of friends of the user.

(2) Determining the impact of the friends of the user on the user according to the user behavior data to obtain the social impact degree.

For example, specifically, based on the user behavior data, and at a preset pushing phase, interaction information of interaction between friends of the user and the promotion information, and interaction information of interaction between friends of the user who interacted with the promotion information and other users may be determined. Then, the social impact degree of the user at the preset pushing phase can be calculated according to the interaction information of the interaction between the friends of the user and the promotion information and the interaction information of the interaction between friends of the user who interacted with the promotion information and other users.

A pushing time period of the promotion information may be divided into several phases according to a pushing requirement of the promotion information. These phases are referred to as pushing phases.

The pushing phases may be specifically determined according to an actual application requirement. For example, a pushing time period of promotion information may be divided into an early pushing phase, a middle pushing phase, and a late pushing phase. A time range of the early pushing phase is t1, a time range of the middle pushing phase is t2, and a time range of the late pushing phase is t3. Alternatively, the pushing time period may be divided into a first pushing phase, a second pushing phase, ..., an $n^{th}$ pushing phase, and the like. Alternatively, the pushing time period of the promotion information may have only one phase. At different pushing phases, social impact degrees of the user may be the same, or may be different.

104: Determining a pushing target of the promotion information based on, for each user, the degree of relevance between the user and the promotion information, the personal impact degree, and the social impact degree.

For example, specifically, according to the degree of relevance between the user and the promotion information, the personal impact degree, and the social impact degree and according to a preset algorithm, a score for pushing the promotion information to the user at a preset pushing phase is calculated as the score of the user at the preset pushing phase for each user, and then those users whose scores exceed a preset threshold are determined as the pushing target at the preset pushing phase. Both the preset algorithm and the preset threshold may be set according to an actual application requirement.

Optionally, because personal impact degrees and social impact degrees of the user may be different in different pushing phases, to improve calculation accuracy, the personal impact degrees and the social impact degrees of the user in different pushing phases may be adjusted. That is, when calculating the score of each user, the followings may be performed.

(1) A personal-impact-degree coefficient and a social-impact-degree coefficient that correspond to the preset pushing phase are obtained. The personal-impact-degree coefficient and the social-impact-degree coefficient may be specifically determined according to an actual application requirement.

For example, a personal impact degree shows impact of the behavior of a user on another user. During interaction with promotion information such as advertisement, a user having a higher personal impact degree first has more interaction (behavior that can be seen by a friend, such as liking, commenting, and reposting). In addition, the interaction between the user having a higher personal impact degree and the promotion information can more easily cause an interaction between a friend of the user and the promotion information. Therefore, at an early pushing phase, the promotion information may be focused on such users. In this way, more interaction can be obtained at the early pushing phase, and other people are encouraged to have interaction. Thus, at an early pushing phase, for example, when the pushing phase t is relatively small, a relatively large personal-impact-degree coefficient can be set. That is, the personal-impact-degree coefficient can be set to be inversely proportional to the pushing phase t. A social impact degree shows impact of a friend of a user on the user. During interaction with promotion information such as advertisement, when all friends of a user like or comment on the promotion information, or the like, a probability that the user interacts with the promotion information greatly increases. Therefore, in a late pushing phase of the promotion information, the promotion information may be focused on the users having a large number of friends that have interacted with the promotion information. In this way, it is easier to generate interaction. Therefore, when the pushing phase t is relatively large, a relatively large social-impact-degree coefficient can be set. That is, the social-impact-degree coefficient is set to be directly proportional to the pushing phase t.

(2) The personal impact degree of the user is adjusted by using the personal-impact-degree coefficient to obtain the adjusted personal impact degree. For example, the personal impact degree of the user may be multiplied by the personal-impact-degree coefficient to obtain the adjusted personal impact degree.

(3) The social impact degree of the user is adjusted by using the social-impact-degree coefficient to obtain the adjusted social impact degree. For example, the social impact degree of the user may be multiplied by the social-impact-degree coefficient to obtain the adjusted social impact degree.

(4) The sum of the degree of relevance between the user and the promotion information, the adjusted personal impact degree, and the adjusted social impact degree are calculated to obtain the score of the user at the preset pushing phase. For example, the score of the user at the preset pushing phase may be expressed by using the following formula:

$$score_t = relevance + \alpha_t \cdot PI + \beta_t \cdot SI_t,$$

where $score_t$ represents the score of the user at the preset pushing phase t (such as at a time point t), and a higher score indicates earlier pushing. Relevance indicates the degree of relevance between the user and the promotion information, that is, a degree to which the user is interested in the promotion information such as advertisement. PI is the personal impact degree of the user, $SI_t$ is the social impact degree of the user in the pushing phase t, $\alpha_t$ is the personal-impact-degree coefficient in the pushing phase t, and $\beta_t$ is the social-impact-degree coefficient in the pushing phase t. All of $SI_t$, $\alpha_t$, and $\beta_t$ may be different in different pushing phases.

105: Pushing the promotion information to the pushing target.

According to the embodiment, the disclosed pushing method includes: obtaining promotion information that needs to be pushed and user behavior data; determining a degree of relevance between a user and the promotion information according to the user behavior data, and calculating a personal impact degree and a social impact degree of the user according to the user behavior data; determining a pushing target of the promotion information based on the degree of relevance between the user and the promotion information, the personal impact degree, and the social impact degree, and pushing the promotion information to the pushing target. In this solution, when promotion information is to be pushed, the personal impact degree and the social impact degree of the user are also considered in addition to the interest of the user, and advertisement pushing policy is optimized based on impact between persons on a social network, thereby improving pushing flexibility and enhancing a pushing effect.

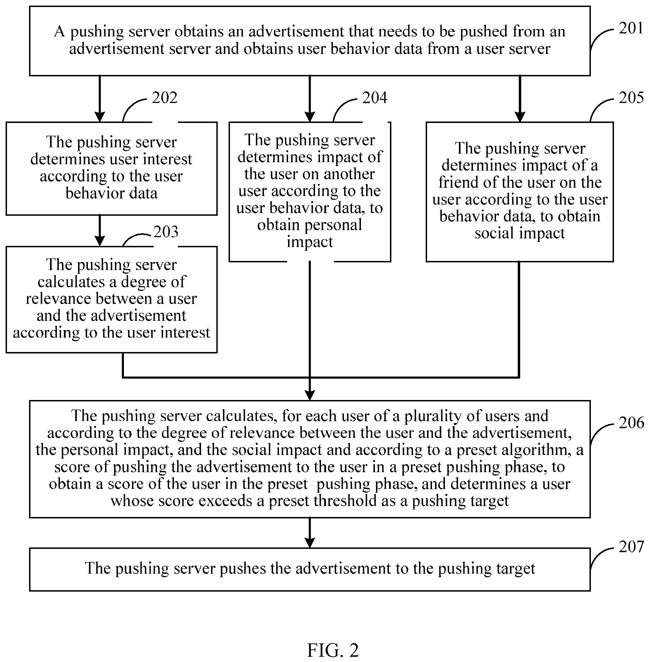

Another embodiment of the present disclosure provides a promotion information pushing apparatus. The pushing apparatus may be specifically integrated in a pushing server and perform a promotion information pushing method, and the promotion information may specifically be advertisement. FIG. 2 shows an exemplary promotion information pushing method.

As shown in FIG. 2, the promotion information pushing method may include the followings.

201: A pushing server obtains advertisement that needs to be pushed from advertisement server and obtains user behavior data from a user server.

The user behavior data refers to relevant data that may be used for analyzing user behavior, such as browsing history, click-through history, download history, comment history, reply history, and/or liking history of the user.

202: The pushing server determines user interest according to the user behavior data.

The user interest may be calculated in multiple ways. For example, an interest weight of the user within a preset time period may be calculated according to the user behavior data. Details are not described herein.

203: The pushing server calculates a degree of relevance between a user and the advertisement according to the user interest.

For example, the pushing server may calculate a degree of matching between the advertisement and the user interest based on the user interest, to obtain the degree of relevance between the user and the advertisement.

For example, if the advertisement is a car advertisement, and the user is interested in cars, it may be determined that the car advertisement is well matched with the user. A specific matching degree value may be determined according to a preset algorithm.

204: The pushing server determines impact of the user on another user according to the user behavior data, to obtain a personal impact degree. The personal impact degree may be calculated according to the user behavior data in multiple ways.

For example, specifically, statistics on a first interaction ratio and a second interaction ratio may be collected according to the user behavior data, and then a personal impact degree is calculated according to the first interaction ratio and the second interaction ratio. For example, corresponding weights are respectively set for the first interaction ratio and the second interaction ratio, the first interaction ratio and the second interaction ratio are respectively multiplied by the corresponding weights, and the multiplication results are then added to obtain a sum as the personal impact degree. Alternatively, the personal impact degree may be calculated in another manner. A specific manner may be determined according to an actual application requirement.

The first interaction ratio is a ratio of interaction between the user and the advertisement in history, that is, within a past preset time period. The ratio of interaction between the user and the advertisement refers to a ratio of "a number of interactions between the user and the advertisement" to "a number of times the advertisement is pushed to the user". The interaction between the user and the advertisement refers to a corresponding operation performed by the user on the advertisement, such as reposting, replying to, liking, or commenting on the advertisement.

The second interaction ratio is a ratio of interaction between the user and a friend of the user in history, that is, within a past preset time period after the user interacts with the advertisement. The ratio of interaction between the user and a friend of the user refers to a ratio of a number of persons that interact to the number of friends, for example, a ratio of persons that replies to a post and reposts the post to the total number of friends. After the user interacts with the advertisement, the interaction between the user and a friend of the user refers to a corresponding operation performed by the friend of the user on the advertisement that has been operated by the user, such as reposting, replying to, liking, or commenting on the advertisement. For example, after the user reposts advertisement, if the friend of the user reposts, replies to, likes, or comments on the reposted advertisement, it indicates that the friend of the user interacts with the user after the user interacts with the advertisement.

The manner in which the personal impact degree is calculated according to the first interaction ratio and the second interaction ratio may be determined according to an actual application requirement. For example, it may be set that a specified functional relationship exists among the first interaction ratio, the second interaction ratio, and the personal impact degree. For another example, the first interaction ratio and the second interaction ratio may be added according to a specified weight, to obtain the personal impact degree, and details are not described herein. The preset time period may also be set according to an actual application requirement.

For another example, each interaction between the user and a friend of the user may be determined according to the user behavior data, and the interaction is scored. Then, a total score of interaction between the user and all friends of the user is calculated according to the scores, and a personal impact degree of the user is calculated according to the total score and the number of friends of the user.

A scoring rule may be determined according to an actual application requirement. A same score may be set for all interactions, or different scores may be set for different interactions. For example, if a user A replies to a comment of a user B in comments on the advertisement, one score is added to the impact of user B on user A, which is expressed as "B->A, + 1". If user A likes a post of user B in WeChat Moments, one score is added to the impact of user B on user A, which is expressed as "B->A, + 1". If user A comments on a post of user B, one score is added to impact of user B on user A, which is expressed as "B->A, + 1". If user B replies to a comment of user A in a post of user B, 0.5 score is added to impact of user A on user B, which is expresses as "A->B, + 0.5". If user A replies in a post of user B, one score is added to impact of user B on user A, which is expressed as "B->A, + 1". If user A replies to a user C in a post of user B, 0.5 score is added to impact of user B on user A, and 0.5 score is added to impact of user C on user A, which are respectively expressed as "B->A, + 1" and "C->A, + 0.5". Finally, statistics on these scores are respectively collected, so that a score of impact of each user on another user is obtained. The score (pi_sum) of a personal impact degree of the user and the quantity (pi_num) of all friends of the user are calculated according to a preset algorithm. For example, the pi_sum and the pi_num are respectively multiplied by corresponding weights, and multiplication results are then added, so that the score (pi) of a personal impact degree of the user, that is, the personal impact degree of the user is obtained.

Optionally, when a historical score is obtained, a corresponding attenuation coefficient may be set. For example, the attenuation coefficient may be set to 0.9. In addition, survival periods may be set for these interactions. For example, it may be set that impact of a comment on a friend maintains for approximately one week.

205: The pushing server determines the impact of a friend of the user on the user according to the user behavior data, to obtain a social impact degree.

For example, specifically, interaction information of an interaction between a friend of the user and the advertisement (that is, the advertisement with which the user interacts) at a preset pushing phase and interaction information of an interaction between the friend of the user who interacts with the advertisement and another user at the preset pushing phase may be determined according to the user behavior data. Then, a social impact degree of the user at the preset pushing phase is calculated according to the interaction information of the interaction between the friend of the user and the advertisement and the interaction information of the interaction between the friend of the user who interacts with the advertisement and another user.

The manner in which a social impact degree is calculated according to the interaction information of the interaction between the friend of the user and the advertisement and the interaction information of the interaction between the friend of the user who interacts with the promotion information and another user may also be determined according to an actual application requirement. For example, it may be set that a specified functional relationship exists among the interaction information of the interaction between the friend of the user and the advertisement, the interaction information of the interaction between the friend of the user who interacts with the advertisement and another user, and the social impact degree.

For example, friends of the user who interact with the advertisement reposted by the user, for example, liking, commenting on, or replying to the advertisement, may be determined first, and then it may be determined whether the friends of the user that interact with the advertisement interact with another user, what the number of interactions is, and what the score of each interaction (corresponding scores may be set for different interactions, referring to step 204) is. Then, statistics on the quantity and the scores are collected, so that the quantity (si_num) of friends of the user that have an impact on the user, and a degree (that is, a total score si_sum of these interaction) to which the user is affected by all users (including friends of the user, and another user who interacts with the friends of the user). Calculation is performed according to the si_num and the si_sum and according to a preset algorithm. For example, the si_num and the si_sum are respectively multiplied by corresponding preset weights, and multiplication results are then added, so that the score (si) of a social impact degree of the user, that is, the social impact degree of the user, is obtained.

In different pushing phases, a social impact degree of the user may be the same, or may be different. For example, if a number of interaction between a friend of the user and the advertisement is $SI_{t1}$ in a pushing phase t1, it may be determined that a social impact degree of the user is $SI_{t1}$. For another example, if a number of interaction between a friend of the user and the advertisement is $SI_{t2}$ in a pushing phase t2, it may be determined that a social impact degree of the user is $SI_{t2}$. It should be noted that step 203, step 204, and step 205 may be implemented in any particular order.

206: The pushing server calculates, according to the degree of relevance between the user and the advertisement, the personal impact degree, and the social impact degree and according to a preset algorithm, a score of pushing the advertisement to the user at a preset pushing phase to obtain a score of the user at the preset pushing phase, and determines a user whose score exceeds a preset threshold as a pushing target. Both the preset algorithm and the preset threshold may be set according to an actual application requirement.

Optionally, because a personal impact degree and a social impact degree of the user may be different in different pushing phases, to improve calculation accuracy, a personal impact degree and a social impact degree of the user in different pushing phases may be adjusted. That is, the step in which "a score of pushing the advertisement to the user at a preset pushing phase is calculated according to the degree of relevance between the user and the advertisement, the personal impact degree, and the social impact degree and according to a preset algorithm, to obtain a score of the user at the preset pushing phase" may be specifically as follows:

(1) A personal-impact-degree coefficient and a social-impact-degree coefficient that correspond to the preset pushing phase are obtained.

The personal-impact-degree coefficient and the social-impact-degree coefficient may be specifically determined according to an actual application requirement. For example, it may be set that the personal-impact-degree coefficient is inversely proportional to the pushing phase t, and the social-impact-degree coefficient is directly proportional to the pushing phase t.

(2) The personal impact degree of the user is adjusted by using the personal-impact-degree coefficient, to obtain the adjusted personal impact degree. For example, the personal impact degree of the user may be multiplied by the personal-impact-degree coefficient, to obtain the adjusted personal impact degree.

(3) The social impact degree of the user is adjusted by using the social-impact-degree coefficient, to obtain the adjusted social impact degree. For example, the social impact degree of the user may be multiplied by the social-impact-degree coefficient, to obtain the adjusted social impact degree.

(4) A sum of the degree of relevance between the user and the advertisement, the adjusted personal impact degree, and the adjusted social impact degree is calculated, to obtain a score of the user at the preset pushing phase. For example, the score of the user at the preset pushing phase may be expressed by using the following formula:

$$score_t = relevance + \alpha_t \cdot PI + \beta_t \cdot SI_t,$$

where $score_t$ represents the score of the user at the preset pushing phase t (such as at a time point t), and a higher score indicates earlier pushing. Relevance indicates the degree of relevance between the user and the advertisement, that is, a degree to which the user is interested in the advertisement. PI is the personal impact degree of the user, $SI_t$ is the social impact degree of the user in the pushing phase t, $\alpha_t$ is the personal-impact-degree coefficient in the pushing phase t, and $\beta_t$ is the social-impact-degree coefficient in the pushing phase t. All of $SI_t$, $\alpha_t$, and $\beta_t$ may be different in different pushing phases.

For example, a historical behavior (which mainly refers to a previous interaction between the user and the advertisement) of the user on the advertisement may include commenting on, liking, not being interested in the advertisement, or the like. If the user likes or comments on advertisements for many times in history, even if the user is not very interested in a current to-be-pushed advertisement, the current to-be-pushed advertisement may be called back, or even the current to-be-pushed advertisement is pushed to the user preferentially. On the contrary, if the user always clicks "not interested" for the advertisements in history, even if the user may be interested in a current to-be-pushed advertisement, the current to-be-pushed advertisement is not pushed to the user. It is assumed that a historical behavior of the user of liking and commenting on advertisement and a historical behavior of the user of not being interested in advertisement are respectively quantified as pos and neg, the personal impact degree is quantified as two parameters pi_num and pi_sum, and the social impact degree is quantified as si_num and si_sum.

The relevance degree between the user and the advertisement may be calculated by using a rough sorting formula, where *lookalike* is a similar population expansion coefficient. A specific rough sorting formula may be determined according to an actual application.

For example, the rough sorting formula (which is in a form of a sum) may be as follows:

$$score_1 = lookalike + \alpha \cdot pos + \beta \cdot neg$$

The *lookalike* may be normalized to from 0 to 1. It is set that $\alpha$ is 0.1, $\beta$ is -0.2 (pos + 2 x neg is mainly concentrated from -3.0 to 3.0) and that $\alpha \cdot pos + \beta \cdot neg \in [-0.3, 0.3]$, so that $score_1 = lookalike \pm 0.3$ is obtained.

Alternatively, the following rough sorting formula (which is in a form of a product) may be used:

$$score_1 = lookalike \times (1 + \alpha \cdot pos + \beta \cdot neg).$$

If a rough sorting formula in a form of a product is used, the *lookalike* does not need to be normalized, but needs to be greater than or equal to 0. It may be set that $\alpha$ is 0.15, $\beta$ is -0.3 (pos + 2 x neg is mainly concentrated from -3.0 to 3.0) and that $\alpha \cdot pos + \beta \cdot neg \in [-0.45, 0.45]$, so that $score_1 \in [lookalike \times 0.55, lookalike \times 1.45]$ is obtained.

Further, the score at the preset pushing phase may be calculated, that is, a sorting formula is further used for

calculating $score_t$, that is, the score of the user at the preset pushing phase. A $score_2$ is used as an example below.

The sorting formula (which is in a form of a sum) may be:

$$score_2 = score_1 + \frac{T-t}{T-1}(\lambda_1 \bullet pi\_num + \lambda_2 \bullet pi\_sum) + \frac{t-1}{T-1}(\delta_1 \bullet si\_num + \delta_2 \bullet si\_sum)$$

where T is a total number of times of pushing (such as five), and t is an $n^{th}$ (such as first to fifth) pushing currently. The personal impact degree is more important in an early pushing phase, and the social impact degree is more important in a late phase. Therefore, it may be set that $\lambda_1$ and $\lambda_2$ are 0.01, $\delta_1$ and $\delta_2$ are 0.01, and both $\lambda_1 \bullet pi\_num + \lambda_2 \bullet pi\_sum$ and $\delta_1 \bullet si\_num + \delta_2 \bullet si\_sum$ belong to [0,0.5].

It should be noted that in addition to that a sum of the degree of relevance between the user and the advertisement, the adjusted personal impact degree, and the adjusted social impact degree is calculated, to obtain a score of the user at the preset pushing phase, another algorithm may also be used. For example, after calculation is performed by using a rough sorting formula, the following sorting formula in a form of a product may further be used for calculating the score of the user at the preset pushing phase, which is as follows:

$$score_2 = score_1 \times \left[1 + \frac{T-t+1}{T}(\lambda_1 \bullet pi\_num + \lambda_2 \bullet pi\_sum)\right] \times \left[1 + \frac{t-1}{T}(\delta_1 \bullet si\_num + \delta_2 \bullet si\_sum)\right],$$

where it may be set that $\lambda_1$ and $\lambda_2$ are 0.01, $\delta_1$ and $\delta_2$ are 0.01, and both $\lambda_1 \bullet pi\_num + \lambda_2 \bullet pi\_sum$ and $\delta_1 . si\_num + \delta_2 . si\_sum$ belong to [0, 0.5].

Certainly, another algorithm may also be used. A specific algorithm may be determined according to an actual application requirement.

207: The pushing server pushes the advertisement to the pushing target.

It can be learned from the above that, in this embodiment, the following method is used: obtaining advertisement that needs to be pushed and user behavior data; determining a degree of relevance between a user and the advertisement according to the user behavior data, and calculating a personal impact degree and a social impact degree of the user according to the user behavior data; determining a pushing target of the advertisement based on the degree of relevance between the user and the advertisement, the personal impact degree and the social impact degree; and pushing the advertisement to the pushing target. In this solution, when pushing advertisement, a personal impact degree and a social impact degree of a user are also considered in addition to an interest of the user, pushing policies of advertisements in different pushing phases are optimized based on mutual impact among persons on a social network, thereby improving pushing flexibility and enhancing a pushing effect.

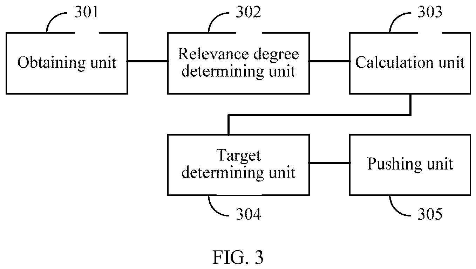

To better implement the foregoing method, an embodiment of the present invention further provides a promotion information pushing apparatus. As shown in FIG. 3, the promotion information pushing apparatus includes an obtaining unit 301, a relevance degree determining unit 302, a calculation unit 303, a target determining unit 304, and a pushing unit 305, etc.

(1) Obtaining unit 301

The obtaining unit 301 is configured to obtain promotion information that needs to be pushed and user behavior data.

The promotion information may be advertisement, or may be other information that needs to be promoted and pushed. The user behavior data refers to relevant data that may be used for analyzing a user behavior, for example, data such as browsing history, click-through history, download history, comment history, reply history, and/or liking history of the user.

(2) Relevance degree determining unit 302

The relevance degree determining unit 302 is configured to determine a degree of relevance between a user and the promotion information according to the user behavior data.

For example, the relevance degree determining unit 302 may be specifically configured to: determine user interest according to the user behavior data, and calculate a degree of relevance between a user and the promotion information according to the user interest.

The user interest may be calculated in multiple ways. For example, an interest weight of the user within a preset time period may be calculated according to the user behavior data.

(3) Calculation unit 303

The calculation unit 303 is configured to calculate a personal impact degree and a social impact degree of the user according to the user behavior data.

For example, the calculation unit 303 may include a first calculation subunit and a second calculation subunit. The first calculation subunit is configured to determine impact of the user on another user according to the user behavior data, to obtain the personal impact degree.

For example, the first calculation subunit may be specifically configured to: collect statistics on a first interaction ratio and a second interaction ratio according to the user behavior data, and calculate the personal impact degree according to the first interaction ratio and the second interaction ratio.

The first interaction ratio is a ratio of interaction between the user and the promotion information in history, that is, within a past preset time period. The second interaction ratio is a ratio of interaction between the user and a friend of the user in history, that is, within a past preset time period after the user interacts with the promotion information. For details, please refer to the foregoing embodiments.

Alternatively, the first calculation subunit may be specifically configured to: determine each interaction between the user and a friend of the user according to the user behavior data, and score the interaction; collect statistics on a total score of interaction between the user and all friends of the user according to the scores, and calculate the personal impact degree of the user according to the total score and the number of friends of the user. For details, please refer to the foregoing embodiments.

The second calculation subunit is configured to determine impact of a friend of the user on the user according to the user behavior data, to obtain the social impact degree.

For example, the second calculation subunit may be specifically configured to: determine interaction information of an interaction between a friend of the user and the promotion information at a preset pushing phase and interaction information of an interaction between the friend of the user who interacts with the promotion information and another user at the preset pushing phase according to the user behavior data, and then calculate a social impact degree of the user at the preset pushing phase according to the interaction information of the interaction between the friend of the user and the promotion information, and the interaction information of the interaction between the friend of the user who interacts with the promotion information and the another user. For details, refer to the foregoing embodiments, and details are not described herein again.

A pushing time period of the promotion information may be divided into several phases according to a pushing requirement of the promotion information. These phases are referred to as pushing phases.

The pushing phases may be specifically determined according to an actual application requirement. For example, a pushing time period of promotion information may be divided into an early pushing phase, a middle pushing phase, and a late pushing phase. A time rang of the early pushing phase is t1, a time rang of the middle pushing phase is t2, and a time rang of the late pushing phase is t3, and the like.

(4) Target determining unit 304

The target determining unit 304 is configured to determine a pushing target of the promotion information based on the degree of relevance between the user and the promotion information, the personal impact degree, and the social impact degree.

For example, the target determining unit 304 may be specifically configured to: calculate, for each user and according to the degree of relevance between the user and the promotion information, the personal impact degree, and the social impact degree and according to a preset algorithm, a score of pushing the promotion information to the user at a preset pushing phase, to obtain a score of the user at the preset pushing phase, and determine a user whose score exceeds a preset threshold as a pushing target at the preset pushing phase.

Both the preset algorithm and the preset threshold may be set according to an actual application requirement. Optionally, because a personal impact degree and a social impact degree of the user may be different in different pushing phases, to improve calculation accuracy, a personal impact degree and a social impact degree of the user in different pushing phases may be adjusted.

That is, the target determining unit 304 may be specifically configured to: obtain a personal-impact-degree coefficient and a social-impact-degree coefficient that correspond to the preset pushing phase; adjust the personal impact degree of the user by using the personal-impact-degree coefficient, to obtain the adjusted personal impact degree; adjust the social impact degree of the user by using the social-impact-degree coefficient, to obtain the adjusted social impact degree; and calculate a sum of the degree of relevance between the user and the promotion information, the adjusted personal impact degree, and the adjusted social impact degree, to obtain a score of the user at the preset pushing phase. For example, the score of the user at the preset pushing phase may be expressed by using the following formula:

$$score_t = relevance + \alpha_t \cdot PI + \beta_t \cdot SI_t ,$$

where $score_t$ represents the score of the user at the preset pushing phase t (such as at a time point t), and a higher score indicates earlier pushing. Relevance indicates the degree of relevance between the user and the promotion information, that is, a degree to which the user is interested in the promotion information. PI is the personal impact degree of the user, $SI_t$ is the social impact degree of the user in the pushing phase t, $\alpha_t$ is the personal-impact-degree coefficient in the pushing phase t, and $\beta_t$ is the social-impact-degree coefficient in the pushing phase t. All of $SI_t$, $\alpha_t$, and $\beta_t$ may be different in different pushing phases.

The personal-impact-degree coefficient $\beta_t$ and the social-impact-degree coefficient $SI_t$ may be specifically determined according to an actual application requirement. For example, it may be set that the personal-impact-degree coefficient $\beta_t$ is inversely proportional to the pushing phase t, and the social-impact-degree coefficient $SI_t$ is directly proportional to the pushing phase t.

(5) Pushing unit 305

The pushing unit 305 is configured to push the promotion information to the pushing target. In a specific implementation, each of the foregoing units may be implemented as an independent entity, or may be implemented as one or several entities through random combination. For a specific implementation of each unit, please refer to the method embodiments above.

The promotion information pushing apparatus may be specifically integrated in a device of a server such as a pushing server.

It can be learned from the above that, in this embodiment, the obtaining unit 301 of the promotion information pushing apparatus may obtain promotion information that needs to be pushed and user behavior data; the relevance degree determining unit 302 determines a degree of relevance between a user and the promotion information according to the user behavior data, and the calculation unit 303 calculates a personal impact degree and a social impact degree of the user according to the user behavior data; the target determining unit 304 determines a pushing target of the promotion information based on the degree of relevance between the user and the promotion information, the personal impact degree, and the social impact degree; and the pushing unit 305 pushes the promotion information to the pushing target. In this solution, when promotion information is to be pushed, a personal impact degree and a social impact degree of a user are also considered in addition to an interest of the user, and advertisement pushing policy is optimized based on impact between persons on a social network, thereby improving pushing flexibility and enhancing a pushing effect.

Correspondingly, an embodiment of the present invention further provides a promotion information pushing system that includes any promotion information pushing apparatus provided in the embodiments of the present invention. For details of the promotion information pushing apparatus, please refer to the above embodiments.

The promotion information pushing apparatus may be specifically integrated in a device of a server such as a pushing server. An example may be as follows.

The pushing server is configured to: obtain promotion information that needs to be pushed and user behavior data; determine a degree of relevance between a user and the promotion information according to the user behavior data; calculate a personal impact degree and a social impact degree of the user according to the user behavior data; determine a pushing target of the promotion information based on the degree of relevance between the user and the promotion information, the personal impact degree, and the social impact degree; and push the promotion information to the pushing target.

The pushing server is specifically configured to: determine user interest according to the user behavior data, and calculate a degree of relevance between a user and the promotion information according to the user interest.

The pushing server is specifically configured to determine impact of the user on another user according to the user behavior data, to obtain the personal impact degree. For example, the pushing server may specifically collect statistics on a first interaction ratio and a second interaction ratio according to the user behavior data, and calculate the personal impact degree according to the first interaction ratio and the second interaction ratio.

The first interaction ratio is a ratio of interaction between the user and the promotion information in history, that is, within a past preset time period. The second interaction ratio is a ratio of interaction between the user and a friend of the user in history, that is, within a past preset time period after the user interacts with the promotion information. For details, refer to the foregoing embodiments, and details are not described herein again.

The pushing server is specifically configured to determine impact of a friend of the user on the user according to the user behavior data, to obtain the social impact degree. For example, specifically, the pushing server may determine interaction information of an interaction between a friend of the user and the promotion information at a preset pushing phase and interaction information of an interaction between the friend of the user who interacts with the promotion information and another user at the preset pushing phase according to the user behavior data, and calculate a social impact degree of the user at the preset pushing phase according to the interaction information of the interaction between the friend of the user and the promotion information, and the interaction information of the interaction between the friend of the user who interacts with the promotion information and the another user.

The pushing server may be specifically configured to: calculate, for each user and according to the degree of relevance between the user and the promotion information, the personal impact degree, and the social impact degree and according to a preset algorithm, a score of pushing the promotion information to the user at a preset pushing phase, to obtain a score of the user at the preset pushing phase, and determine a user whose score exceeds a preset threshold as a pushing target at the preset pushing phase. For details, refer to the foregoing embodiments, and details are not described herein again.

In addition, the promotion information pushing system may further include other devices, such as a user device and a user server, etc. The user device may be used for receiving the promotion information pushed by the pushing server and performing an operation on the promotion information. The user server may be used for collecting a behavior of each user to generate user behavior data, and providing the user behavior data to the pushing server. For a specific implementation of each of the foregoing devices, please refer to the foregoing embodiments.

Because the promotion information pushing system may include any promotion information pushing apparatus provided in the embodiments of the present invention, beneficial effects of any promotion information pushing apparatus provided in the embodiments of the present invention can be implemented. For details, refer to the foregoing embodiments, and details are not described herein again.

A person of ordinary skill in the art may understand that all or some steps of the methods in the embodiments may be implemented by a program instructing relevant hardware. The program may be stored in a computer readable storage medium, and the storage medium may be a read-only memory (ROM), a random access memory (RAM), a magnetic disk, an optical disk, and the like.

Although the principles and implementations of the present disclosure are described by using specific embodiments in the specification, the foregoing descriptions of the embodiments are only intended to help understand the method and core idea of the method of the present disclosure. Meanwhile, a person of ordinary skill in the art may make modifications to the specific implementations and application range according to the idea of the present disclosure. Thus, the content of the specification should not be construed as a limitation to the present disclosure.

**Claims**

1.  A promotion information pushing method, comprising:

    obtaining promotion information that needs to be pushed and user behavior data;
    determining a degree of relevance between a user and the promotion information according to the user behavior data;
    calculating a personal impact degree and a social impact degree of the user according to the user behavior data;
    determining a pushing target of the promotion information based on the degree of relevance between the user and the promotion information, the personal impact degree, and the social impact degree; and
    pushing the promotion information to the pushing target.

2.  The method according to claim 1, wherein the determining a degree of relevance between a user and the promotion information according to the user behavior data comprises:

    determining user interest according to the user behavior data; and
    calculating a degree of relevance between a user and the promotion information according to the user interest.

3.  The method according to claim 1, wherein the calculating a personal impact degree and a social impact degree of the user according to the user behavior data comprises:

    determining impact of the user on another user according to the user behavior data to obtain the personal impact degree; and
    determining impact of a friend of the user on the user according to the user behavior data to obtain the social impact degree.

4.  The method according to claim 3, wherein the determining impact of the user on another user according to the user behavior data, to obtain the personal impact degree comprises:

collecting statistics on a first interaction ratio and a second interaction ratio according to the user behavior data, the first interaction ratio being a ratio of interaction between the user and the promotion information within a past preset time period, and the second interaction ratio being a ratio of interaction between the user and a friend of the user within a past preset time period after the user interacts with the promotion information; and calculating the personal impact degree according to the first interaction ratio and the second interaction ratio; or determining each interaction between the user and a friend of the user according to the user behavior data, and scoring the interaction; collecting statistics on a total score of interaction between the user and all friends of the user according to the scores, and calculating the personal impact degree of the user according to the total score and the number of friends of the user.

5. The method according to claim 3, wherein the determining impact of a friend of the user on the user according to the user behavior data to obtain the social impact degree comprises:

determining, according to the user behavior data, interaction information of an interaction between a friend of the user and the promotion information at a preset pushing phase, and interaction information of an interaction between the friend of the user who interacts with the promotion information and another user at the preset pushing phase; and
calculating a social impact degree of the user at the preset pushing phase according to the interaction information of the interaction between the friend of the user and the promotion information, and the interaction information of the interaction between the friend of the user who interacts with the promotion information and the another user.

6. The method according to claim 1, wherein the determining a pushing target of the promotion information based on the degree of relevance between the user and the promotion information, the personal impact degree, and the social impact degree comprises:

for each user of a plurality of users, according to the degree of relevance between the user and the promotion information, calculating, the personal impact degree, and the social impact degree and according to a preset algorithm, a score of pushing the promotion information to the user at a preset pushing phase, to obtain a score of the user at the preset pushing phase; and
determining a user whose score exceeds a preset threshold as a pushing target at the preset pushing phase.

7. The method according to claim 6, wherein the calculating the personal impact degree, and the social impact degree and according to a preset algorithm, a score of pushing the promotion information to the user at a preset pushing phase, to obtain a score of the user at the preset pushing phase comprises:

obtaining a personal-impact-degree coefficient and a social-impact-degree coefficient that correspond to the preset pushing phase;
adjusting the personal impact degree of the user by using the personal-impact-degree coefficient, to obtain the adjusted personal impact degree;
adjusting the social impact degree of the user by using the social-impact-degree coefficient, to obtain the adjusted social impact degree; and
calculating a sum of the degree of relevance between the user and the promotion information, the adjusted personal impact degree, and the adjusted social impact degree, to obtain a score of the user at the preset pushing phase.

8. A promotion information pushing apparatus, comprising a processor and a memory for storing data, the processor being configured for:

obtaining promotion information that needs to be pushed and user behavior data;
determining a degree of relevance between a user and the promotion information according to the user behavior data;
calculating a personal impact degree and a social impact degree of the user according to the user behavior data;
determining a pushing target of the promotion information based on the degree of relevance between the user and the promotion information, the personal impact degree, and the social impact degree; and
pushing the promotion information to the pushing target.

9. The apparatus according to claim 8, wherein the processor is configured for:
determining user interest according to the user behavior data, and calculating a degree of relevance between a user and the promotion information according to the user interest.

10. The apparatus according to claim 8, wherein the processor is configured for:

    determining impact of the user on another user according to the user behavior data, to obtain the personal impact degree; and
    determining impact of a friend of the user on the user according to the user behavior data, to obtain the social impact degree.

11. The apparatus according to claim 10, wherein the processor is configured for:
    collecting statistics on a first interaction ratio and a second interaction ratio according to the user behavior data, and calculating the personal impact degree according to the first interaction ratio and the second interaction ratio; the first interaction ratio being a ratio of interaction between the user and the promotion information within a past preset time period, and the second interaction ratio being a ratio of interaction between the user and a friend of the user within a past preset time period after the user interacts with the promotion information.

12. The apparatus according to claim 10, wherein the processor is configured for:
    determining each interaction between the user and a friend of the user according to the user behavior data, and scoring the interaction; collecting statistics on a total score of interaction between the user and all friends of the user according to the scores, and calculating the personal impact degree of the user according to the total score and the number of friends of the user.

13. The apparatus according to claim 10, wherein the processor is configured for:
    determining, according to the user behavior data, a number of interaction between a friend of the user and the promotion information at a preset pushing phase, and interaction information of an interaction between the friend of the user who interacts with the promotion information and another user at the preset pushing phase; and calculating a social impact degree of the user at the preset pushing phase according to the number of interaction between the friend of the user and the promotion information, and the interaction information of the interaction between the friend of the user who interacts with the promotion information and the another user.

14. The apparatus according to claim 8, wherein the processor is configured for:
    for each user of a plurality of users, calculating, according to the degree of relevance between the user and the promotion information, the personal impact degree, and the social impact degree and according to a preset algorithm, a score of pushing the promotion information to the user at a preset pushing phase, to obtain a score of the user at the preset pushing phase; and determining a user whose score exceeds a preset threshold as a pushing target at the preset pushing phase.

15. The apparatus according to claim 14, wherein the processor is configured for:

    obtaining a personal-impact-degree coefficient and a social-impact-degree coefficient that correspond to the preset pushing phase;
    adjusting the personal impact degree of the user by using the personal-impact-degree coefficient, to obtain the adjusted personal impact degree;
    adjusting the social impact degree of the user by using the social-impact-degree coefficient, to obtain the adjusted social impact degree; and
    calculating a sum of the degree of relevance between the user and the promotion information, the adjusted personal impact degree, and the adjusted social impact degree, to obtain a score of the user at the preset pushing phase.

16. A non-transitory computer-readable storage medium, storing a processor executable instruction, the processor executable instruction being used for performing operations in any of claims 1 to 7.

User behavior

Network

User device

User server

User behavior data

Network

User behavior

Network

User device

Promotion information

Network

Pushing server

Determine a degree of relevance between a user and promotion information, and personal impact and social impact of the user according to user behavior data, and push the promotion information according to the degree of relevance between the user and the promotion information, and the personal impact and the social impact

FIG. 1A

Obtaining promotion information that needs to be pushed and user behavior data ⌐ 101

Determining a degree of relevance between a user and the promotion information according to the user behavior data ⌐ 102

Calculating a personal impact degree and a social impact degree of the user according to the user behavior data ⌐ 103

Determining a pushing target of the promotion information based on, for each user, the degree of relevance between the user and the promotion information, the personal impact degree, and the social impact degree ⌐ 104

Pushing the promotion information to the pushing target ⌐ 105

FIG. 1B

A pushing server obtains an advertisement that needs to be pushed from an advertisement server and obtains user behavior data from a user server ⌐ 201

⌐ 202

The pushing server determines user interest according to the user behavior data

⌐ 204

The pushing server determines impact of the user on another user according to the user behavior data, to obtain personal impact

⌐ 205

The pushing server determines impact of a friend of the user on the user according to the user behavior data, to obtain social impact

⌐203

The pushing server calculates a degree of relevance between a user and the advertisement according to the user interest

The pushing server calculates, for each user of a plurality of users and according to the degree of relevance between the user and the advertisement, the personal impact, and the social impact and according to a preset algorithm, a score of pushing the advertisement to the user in a preset pushing phase, to obtain a score of the user in the preset pushing phase, and determines a user whose score exceeds a preset threshold as a pushing target ⌐ 206

The pushing server pushes the advertisement to the pushing target ⌐ 207

FIG. 2

FIG. 3

# INTERNATIONAL SEARCH REPORT

| International application No. |
|---|
| **PCT/CN2016/082373** |

### A. CLASSIFICATION OF SUBJECT MATTER

G06Q 30/02 (2012.01) i

According to International Patent Classification (IPC) or to both national classification and IPC

### B. FIELDS SEARCHED

Minimum documentation searched (classification system followed by classification symbols)

G06Q,; G06F

Documentation searched other than minimum documentation to the extent that such documents are included in the fields searched

Electronic data base consulted during the international search (name of data base and, where practicable, search terms used)

CNKI, CNPAT, WPI, EPODOC: love, record, social intercourse, put in, relevancy, compute, generalize, user behaviour, data, like, friend circle, advertis+, social, network, platform, media, influenc+, friend+, commen+, review+, forward+, post, push, user, interest+, history, behavior, profile+

### C. DOCUMENTS CONSIDERED TO BE RELEVANT

| Category* | Citation of document, with indication, where appropriate, of the relevant passages | Relevant to claim No. |
|---|---|---|
| X | WO 2013063537 A1 (ORMONT, J. et al.), 02 May 2013 (02.05.2013), description, page 2, the last paragraph to page 4, paragraph 2 and page 18, the last paragraph to page 20, 2nd to last paragraph, and figures 1 and 3 | 1-4, 8-12, 16 |
| PX | CN 105005918 A (JINJUAN MEDIA & TECHNOLOGY CO., LTD.), 28 October 2015 (28.10.2015), claim 1, and figure 1 | 1-4, 8-12, 16 |
| A | CN 102414706 A (GOOGLE INC.), 11 April 2012 (11.04.2012), the whole document | 1-16 |
| A | WO 2015058307 A1 (SYSOMOS L. P.), 30 April 2015 (30.04.2015), the whole document | 1-16 |
| A | CN 101071437 A (TENCENT TECHNOLOGY (SHENZHEN) CO., LTD.), 14 November 2007 (14.11.2007), the whole document | 1-16 |
| A | CN 102254044 A (HONG, Tao), 23 November 2011 (23.11.2011), the whole document | 1-16 |
| A | CN 101034997 A (NUCHANNEL HOLDING CO., LTD.), 12 September 2007 (12.09.2007), the whole document | 1-16 |

☐ Further documents are listed in the continuation of Box C.　　☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 13 July 2016 (13.07.2016) | **26 July 2016 (26.07.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**SUN, Changxin**<br><br>Telephone No.: (86-10) **01061648077** |

Form PCT/ISA/210 (second sheet) (July 2009)

## INTERNATIONAL SEARCH REPORT
Information on patent family members

International application No.

**PCT/CN2016/082373**

| Patent Documents referred in the Report | Publication Date | Patent Family | Publication Date |
|---|---|---|---|
| WO 2013063537 A1 | 02 May 2013 | US 2013110641 A1 | 02 May 2013 |
| | | US 2013110583 A1 | 02 May 2013 |
| CN 105005918 A | 28 October 2015 | None | |
| CN 102414706 A | 11 April 2012 | KR 20110127245 A | 24 November 2011 |
| | | KR 101616064 B1 | 12 May 2016 |
| | | AU 2009341524 A1 | 22 September 2011 |
| | | EP 2404263 A1 | 11 January 2012 |
| | | AU 2009341524 B2 | 24 December 2015 |
| | | CA 2754120 A1 | 10 September 2010 |
| | | WO 2010099631 A1 | 10 September 2010 |
| | | JP 2012519335 A | 23 August 2012 |
| | | JP 5385412 B2 | 08 January 2014 |
| | | BR PI0924431 A2 | 26 January 2016 |
| | | AU 2016201887 A1 | 21 April 2016 |
| | | EP 2404263 A4 | 08 January 2014 |
| | | JP 2014006930 A | 16 January 2014 |
| | | JP 5731608 B2 | 10 June 2015 |
| WO 2015058307 A1 | 30 April 2015 | US 2015120721 A1 | 30 April 2015 |
| | | CA 2927150 A1 | 30 April 2015 |
| | | US 2015120782 A1 | 30 April 2015 |
| | | US 9262537 B2 | 16 February 2016 |
| | | US 2015120713 A1 | 30 April 2015 |
| | | WO 2015058308 A1 | 30 April 2015 |
| | | WO 2015058309 A1 | 30 April 2015 |
| | | US 2015120717 A1 | 30 April 2015 |
| | | CN 105723402 A | 29 June 2016 |
| CN 101071437 A | 14 November 2007 | WO 2008116424 A1 | 02 October 2008 |
| CN 102254044 A | 23 November 2011 | WO 2012151726 A1 | 15 November 2012 |
| | | US 2014188875 A1 | 03 July 2014 |
| CN 101034997 A | 12 September 2007 | US 2007214207 A1 | 13 September 2007 |
| | | JP 2007241982 A | 20 September 2007 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201510585037X